# EUROPÄISCHE PATENTSCHRIFT

(11) **EP 0 502 134 B1**
(45) Veröffentlichungstag und Bekanntmachung des Hinweises auf die Patenterteilung: **29.12.1993**
(21) Anmeldenummer: 91914132.5
(22) Anmeldetag: 21.08.1991
(51) Int. Cl.: B23K 9/32

(54) **VIELZWECKZANGE FÜR DAS SCHUTZGASSCHWEISSEN**
MULTI-PURPOSE PINCERS FOR WELDING UNDER PROTECTIVE GAS
PINCE POLYVALENTE POUR SOUDAGE A L'ARC EN ATMOSPHERE GAZEUSE

(30) Priorität: 25.09.1990 CH 3084/90
(43) Veröffentlichungstag der Anmeldung: 09.09.1992
(73) Patentinhaber: VIKTOR RÄTZER AG, CH-5606 Dintikon (CH)
(72) Erfinder: Rätzer, Viktor, CH-5606 Dintikon (CH)
(74) Vertreter: Schwabe - Sandmair - Marx
(86) Internationale Anmeldenummer: CH9100178
(87) Internationale Veröffentlichungsnummer: WO9205007

(56) Entgegenhaltungen:
- EP-A- 0 090 233
- WELDING & METAL FABRICATION, Vol. 57, No. 1, February 1989, REDHILL, SURREY (GB), page 41; "WELPER A. "must tool for welding operations - a single pair serves eight purposes"

## Beschreibung

Die Vielzweckzange für das Schutzgasschweissen dient zur Wartung des Schweissbrenners eines Schutzgasschweissgerätes. Eine solche Zange ist z.B. in Welding & Metal Fabrication, Bd.57, Nr.1, Februar 1989, Seite 41 ("Welper") beschrieben.

In der metallverarbeitenden Industrie (Maschinenbau, Fahrzeugbau, Schiffsbau, Stahlbau,...) ist das Schutzgasschweissen nicht mehr weg zu denken. Auch die kleinste Metallbau- oder Schlossereiwerkstatt verfügt über Schutzgasschweissgeräte. Die heutigen Schutzgasschweissgeräte sind ausgereift und einfach zu bedienen.
Allerdings muss der Schweissbrenner (im folgenden Schweisspistole genannt) sorgfältig behandelt und gut gewartet werden. Sonst können keine hochwertigen Schweissnähte ausgeführt werden, welche den strengen Qualitätsanforderungen genügen.
Die wichtigsten Arbeiten im täglichen Umgang mit Schweisspistolen sind das Entfernen und Reinigen der Schutzgasdüse, das Austauschen der Stromdüse (auch Kontaktdüse oder Drahtdurchführungsdüse genannt), das Ablängen des Schweissdrahtes und das Lösen der mit der Stromdüse verschweissten oder verklebten Drahtelektrode (Bildung einer Schweissperle) nach einem Nachbrand.
Für alle genannten Arbeiten muss eine Vielzahl verschiedenster Werkzeuge am Arbeitsplatz bereitgehalten werden. Die entsprechende Unordnung und die ständige Sucherei nach dem gerade benötigten Werkzeug ist lästig und zeitraubend. Da die bisher verwendeten Werkzeuge nicht speziell für die geschilderten Aufgaben geschaffen sind, können die Arbeiten nicht zufriedenstellend ausgeführt werden.

Die neue Vielzweckzange für das Schutzgasschweissen ersetzt alle bisherigen Behelfswerkzeuge. Sie ist den Bedürfnissen angepasst und erlaubt es deshalb, die oben erwähnten Arbeiten zügig und problemlos zur vollsten Zufriedenheit des Schweissers auszuführen. Es zeigen:
- Fig. 1: Vielzweckzange für das Schutzgasschweissen
- Fig. 2: Lösen des festgeschweissten Schweissdrahtes (Schweissperle)
- Fig. 3: Reinigen der Schutzgasdüse von Metallspritzern
- Fig. 4: Massgerechtes Ablängen des Schweissdrahtes
- Fig. 5: Abziehen der Schutzgasdüse
- Fig. 6: Abschrauben der Stromdüse

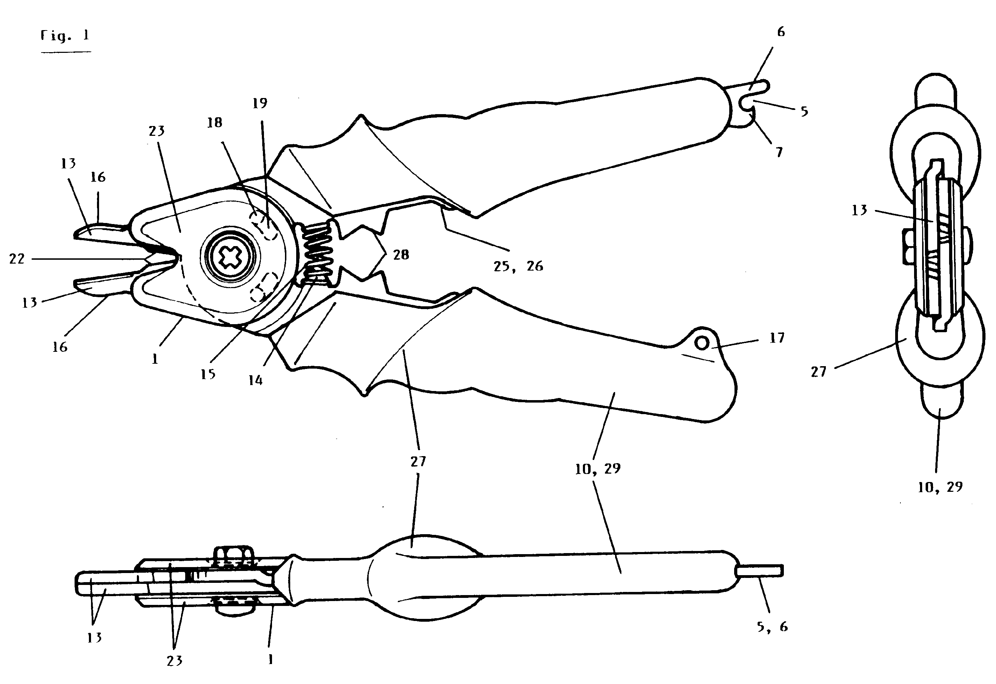

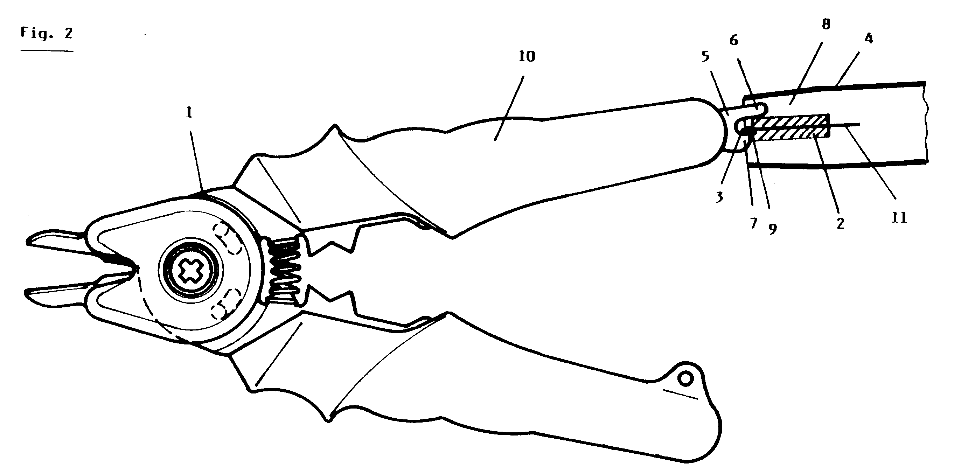

Die Erfindung erlaubt es, die Schweisspistole eines Schutzgasschweissgerätes dank den Ausbildungsmerkmalen nach dem Patentanspruch 1 und dem Patentanspruch 12 schnell und mühelos zu warten.
Die herausragendste Eigenschaft der neuen Vielzweckzange für das Schutzgasschweissen 1 (Fig. 1) ist die, dass erstmals mit einem einzigen Werkzeug nach einem Nachbrand die an der Stromdüse 2 festgeschweisste Schweissperle 3 (Fig. 2) ohne Mühe und mit vernachlässigbarem Zeitaufwand gelöst werden kann.
Figur 2a zeigt, weshalb die Schweissperle 3 mit herkömmlichen Werkzeugen nur mit grössten Anstrengungen entfernt werden kann: Die Schweissperle 3 ist klein und deshalb schwer mit einer gewöhnlichen Zange zu greifen. Erschwerend kommt noch hinzu, dass die Stromdüse 2 und somit die zu entfernende Schweissperle 3 in der Schutzgasdüse 4 versenkt sind, weshalb auch die Verwendung einer spitzen Zange nicht den gewünschten Erfolg bringt.
Bisher blieb also nichts anderes übrig, als die Schutzgasdüse 4 von der Schweisspistole abzuziehen und die Schweissperle an einer Schleifmaschine abzuschleifen oder mit einer Feile abzufeilen. In ganz hartnäckigen Fällen ist sogar ein Teil des Schweissdrahtes im Innern der Stromdüse mit dieser verschweisst. Dann muss auch die Stromdüse abgeschraubt werden, um die Bohrung von der Rückseite her aufzubohren. Anschliessend müssen die Teile wieder zusammengesetzt werden; die ganze Prozedur ist zeitraubend. Ein Nachbrand mit Schweissperlenbildung kommt recht häufig vor, das passiert auch dem besten Schweisser. Als Ursachen seien zum Beispiel ungeeignete Schweißspannung oder Drahtvorschubgeschwindigkeit genannt.
Zum Lösen der Schweissperle 3 (Fig. 2 ) dient der Schweissperlenhaken 5. Dieser Schweissperlenhaken 5 (Fig. 1, Fig. 2) besteht aus einem Hebel 6 und einem spitzen Haken 7. Er sieht einer Flaschenöffnerklinge eines Taschenmessers ähnlich. Eine festgeschweisste Schweissperle 3 lässt sich nun wie folgt mit Hilfe des Schweissperlenhakens 5 lösen: Die Vielzweckzange für das Schutzgasschweissen 1 wird mit einer Hand an dem Griff 10 gehalten, an dessen Ende der Schweissperlenhaken 5 angebracht ist. Der Hebel 6 wird in den ringförmigen Gasaustrittskanal 8 geschoben (Fig. 2 ). Nun wird darauf geachtet, dass der spitze Haken 7 über die Schweissperle 3 gehoben und danach zwischen der Stirnfläche 9 der Stromdüse 2 und der festgeschweissten Schweissperle 3 eingehängt wird. Danach wird mit einer Hebelbewegung, ähnlich wie beim Betätigen des oben erwähnten Flaschenöffners, die Schweissperle 3 von der Stromdüse 2 gelöst und gleichzeitig ein Stück weit herausgezogen. Danach kann der Schweissdraht 11 wieder frei aus der Stromdüse 2 herausfahren, nach dem Abtrennen der Schweissperle ist die Schweisspistole wieder einsatzbereit.
Es ist ersichtlich, dass dank dem Schweissperlenhaken 5 die Schweissperlen 3 ohne Mühe und in kürzester Zeit von der Stromdüse 2 gelöst werden können. Dank der besonderen Form des Schweissperlenhakens 5 ist gewährleistet, dass dieser für alle heute gängigen Schweisspistolen verwendet werden kann.
Selbstverständlich ist es möglich, den spitzen Haken 7 an dessen Kante mit einer Kerbe oder Nut zu versehen, damit dieser den Hals der Schweissperle (also den Uebergang von der Schweissperle zur Stirnseite 9 der Stromdüse 2) besser umfassen oder hintergreifen kann. Es ist auch denkbar, den Schweissperlenhaken 5, mit einem passenden Griff versehen, als eigenständiges Werkzeug anzubieten, also nicht in Kombination mit der neuen Vielzweckzange 1. Allerdings entfallen dadurch die weiteren Vorteile, welche die Vielzweckzange für das Schutzgasschweissen aufweist.

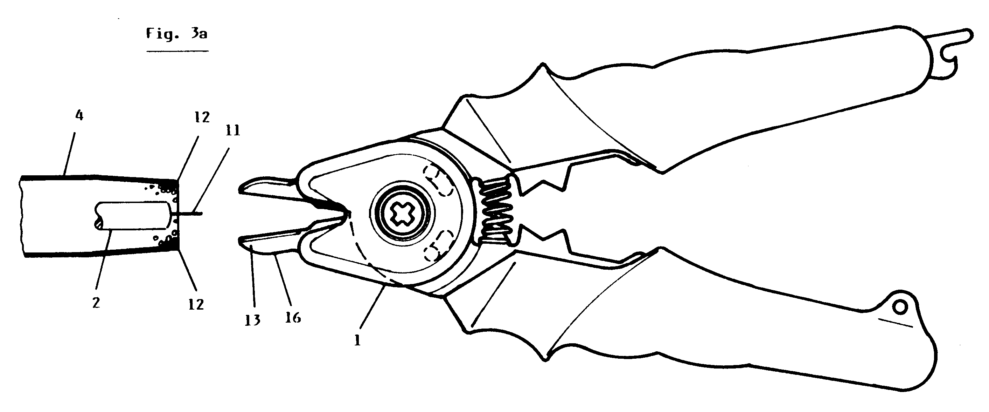

Dazu gehört die Möglichkeit, den Gasaustrittskanal 8 von Metallspritzern 12 zu reinigen (Fig. 3). Aufgrund der sogenannten Blaswirkung des Lichtbogens beim Schutzgasschweissen können kleine Metallspritzer aus dem Schmelzbad gesprengt werden. Wenn diese Metallspritzer sich an der Schutzgasdüse 4 niederschlagen, härten sie aus und bleiben an dieser haften. Mit der Zeit verengt eine Vielzahl von Metallspritzern 12 (Fig. 3a) den Gasaustrittskanal 8. In der Folge wird der Gasdurchfluss so weit gestört, dass der Schutzgasmantel den Lichtbogen nicht mehr gleichmässig umgibt und das saubere Schweissen verunmöglicht.
Bis heute blieb in solchen Fällen nichts anderes zu tun, als mit Schraubenziehern, Reissnadeln, Nadelfeilen etc. die Metallspritzer abzukratzen und die Schweisspistole danach auszuklopfen. Damit dies nicht zu häufig geschehen muss, kann der ringförmige Gasaustrittskanal mit Fetten oder besonderen Sprühmitteln behandelt werden, was allerdings nur eine begrenzte Zeit wirksam ist.
Diese Arbeit kann jetzt dank den Klingen 13 (Fig. 3) der Vielzweckzange für das Schutzgasschweissen 1 rationeller und besser erledigt werden: Die Vielzweckzange 1 wird an den Griffen 10 gehalten, damit die Klingen 13 in den ringförmigen Gasaustrittskanal 8 geschoben werden können. Durch anschliessendes, eventuell mehrmaliges Drehen der Zange um ihre gedachte Längsachse werden automatisch alle Metallspritzer 12 mit dem Rücken 16 der Klingen 13 abgeschlagen beziehungsweise abgeschabt. Anschliessend müssen nur noch die losen Metallspritzer ausgeklopft werden und die Schweisspistole ist wieder einsatzbereit.
Die zwischen Nocken 14 gehaltene Druckfeder 15 (Fig. 3) erleichtert die Handhabung der neuen Vielzweckzange 1 erheblich, weil dadurch die Klingen automatisch von der Feder gespreizt werden. Es ist ersichtlich, dass auf diese Weise die Hand des Anwenders nicht verkrampft, was eine Ermüdung verhindert. Die Klingen 13 sind übrigens so geformt, dass deren Rücken 16 in Arbeitsstellung parallel zu der konischen Innenwand der Schutzgasdüse verläuft. Ein Ausrichten der Vielzweckzange oder besondere Sorgfalt ist also nicht notwendig. Um zu verhindern, dass die Klingen 13 in einem grösseren Winkel als etwa 15° gespreizt werden, sind Anschlagnocken 18 vorgesehen, welche sich nur innerhalb des von den Rillen 19 begrenzten Weges frei bewegen können. Nebenbei sei noch erwähnt, dass die Griffe 10 entsprechend den heutigen ergonomischen Erkenntnissen mit entsprechend geformten Kunststoffgriffen 29 ausgestattet sind. An mindestens einem dieser Griffe ist eine Oese 17 ausgebildet. Dadurch kann die Vielzweckzange 1 an einem Haken oder Stift aufgehängt oder angebunden werden.

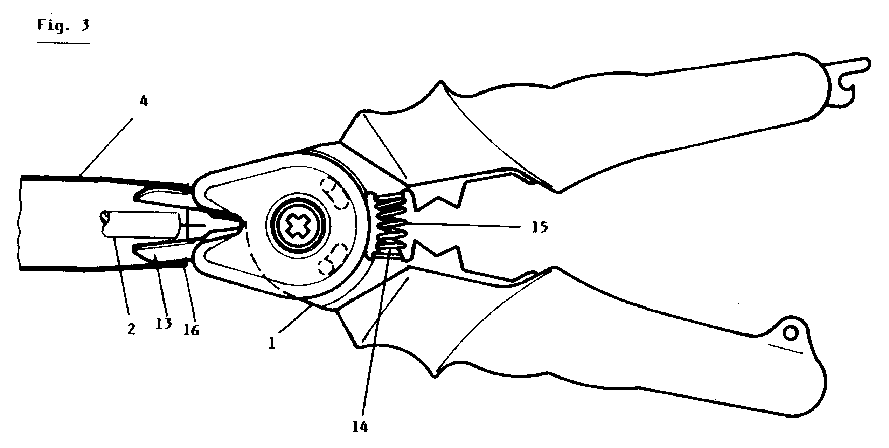

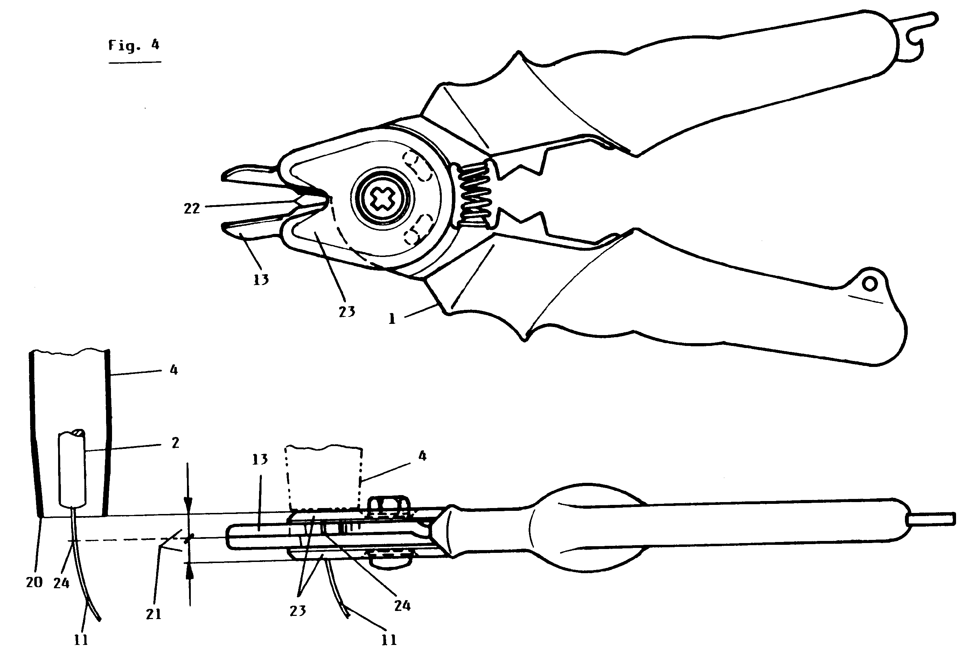

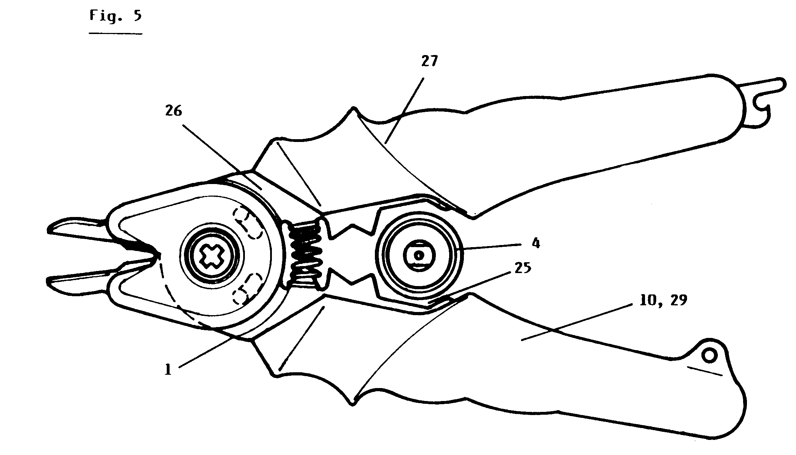

Auch das massgerechte Ablängen des Schweissdrahtes 11 ist mit der neuen Vielzweckzange für das Schutzgasschweissen 1 problemlos möglich. Der Schweissdraht muss, gemessen von der Vorderkante 20 der Schutzgasdüse 4, ziemlich genau um sechs Millimeter vorstehen. Dieser Abstand 21 (Fig. 4) ist notwendig, damit zum einen der Schweissdraht 11 zum Positionieren der Schweisspistole gut sichtbar ist und zum anderen der Neigungswinkel der Schweisspistole stimmt. Der richtige Neigungswinkel sorgt dafür, dass die Blaswirkung des Lichtbogens das Verschweissen der Werkstücke unterstützt. Ein zu weit vorstehender Schweissdraht verhindert übrigens, dass überhaupt mit dem Schweissen begonnen werden kann.
Bis heute wurde der Schweissdraht bei Bedarf mit dem automatischen Drahtvorschub weit genaug ausgefahren und mit einem handelsüblichen Seitenschneider abgelängt. Auf Grund der Klingenform dieser Seitenschneider ist es aber unmöglich, den Abstand von sechs Millimetern einzuhalten, da nur ungefähr abgeschätzt werden kann, wo sich die Schneiden befinden. Und in vielen Fällen werden abgenutzte oder ungeeignete Seitenschneider verwendet, welche den Schweissdraht abklemmen und nicht sauber abschneiden.
Die neue Vielzweckzange verfügt zu diesem Zweck über besondere Schneiden 22 (Fig. 4), welche auf der Innenseite des Ansatzes der Klingen 13 ausgebildet sind. Die Schneiden 22 sind so angeschält (repassiert) oder angeschliffen, dass der Schweissdraht 11 sauber abgeschnitten wird. Zudem ist es dank den seitlichen Distanzbacken 23 ohne Schwierigkeiten möglich, den Schweissdraht 11 auf die optimale Länge von sechs Millimetern abzulängen. Die Distanzbacken 23 sind genau so dick, dass die Schnittkante 24 exakt sechs Millimeter von der Vorderkante 20 der Schutzgasdüse 4 entfernt ist, wenn diese, wie in Figur 4 ersichtlich, an einer Distanzbacke 23 anliegt. Das ergibt sich von selbst, wenn die Vielzweckzange 1 mit offenen Klingen bis zum Anschlag über den abzuschneidenden Schweissdraht geschoben wird. Dadurch, dass beidseitig Distanzbacken 23 angebracht sind, spielt es keine Rolle, von welcher Seite die Vielzweckzange 1 über den Schweissdraht geschoben wird. Die Klingen 13 und somit auch die Schneiden 22 bestehen aus gehärtetem Stahl, um eine möglichst lange Lebensdauer zu erreichen. Mit der neuen Vielzweckzange für das Schutzgasschweissen lässt sich auch die Schutzgasdüse 4 sicher entfernen. Nach dem Schweissen ist die Schutzgasdüse sehr heiss. Sie kann also nicht von Hand angefasst werden, wenn man sie abziehen sollte.
Bis heute werden die Schutzgasdüsen mit einer Rohrzange oder Kombizange abgezogen. Die Kombizangen sind jedoch nicht so gross, dass sie die Schutzgasdüse gut umfassen können und rutschen deshalb leicht ab.
Dank der neuen Vielzweckzange kann auch auf diese Behelfswerkzeuge verzichtet werden. Sie verfügt nämlich über sogenannte Rachenausschnitte 25 an der Innenseite der beiden Zangenschenkel 26 (Fig. 5). Die Rachenausschnitte 25 sind so dimensioniert und geformt, dass alle heute verwendeten Schutzgasdüsen sicher festgeklemmt und abgedreht werden können. Um ein eventuelles Abrutschen der Hand zu verhindern, verfügt der Kunststoffgriff 29 über einen Wulst 27.

Die neue Vielzweckzange für das Schutzgasschweissen 1 eignet sich auch hervorragend zum Entfernen oder Aufsetzen der Stromdüse 2. Von Zeit zu Zeit nutzen sich die Stromdüsen ab oder müssen gegen solche mit einem anderen Bohrungsdurchmesser ausgetauscht werden, wenn ein Schweissdraht 11 mit einem anderen Durchmesser verwendet werden muss. Der Schweissdraht 11 dient bekannterweise auch als Schweisselektrode. Es ist also von grosser Bedeutung, dass zum jeweiligen Drahtdurchmesser die dazu passende Stromdüse 2 eingesetzt wird, um einen ungestörten Stromfluss von der Stromdüse 2 auf den Schweissdraht 11 zu gewährleisten.
Auch für das Ersetzen oder Austauschen der Stromdüse 2 muss bis heute ein spezielles Werkzeug bereitgehalten werden. Es werden vorwiegend Gabelschlüssel, Rollgabelschlüssel ("Engländer") oder auch Flachzangen eingesetzt. Gerade der Einsatz der Flachzange beschädigt die Stromdüse, da sie die Kanten der Auflageflächen der relativ weichen Stromdüse abquetscht. Eine so beschädigte Stromdüse lässt sich nicht mehr einfach auf- oder abschrauben.

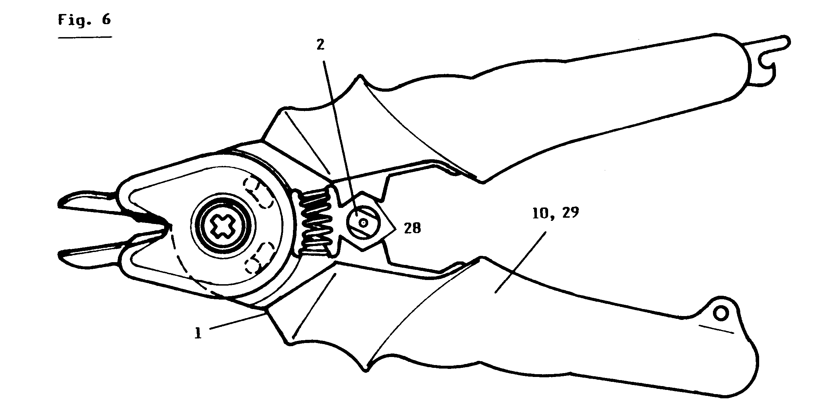

Dank den besonders geformten und dimensionierten v-förmigen Kerben 28 (Fig. 6) an den Innenseiten der Zangenschenkel 26 können mit der Vielzweckzange alle heute verwendeten Stromdüsen unabhängig von deren Querschnitt auf- und abgeschraubt werden, ohne dass sie beschädigt werden.

Die neue Vielzweckzange für das Schutzgasschweissen ersetzt alle bisher benötigten Behelfswerkzeuge am Arbeitsplatz eines Schutzgasschweissgerätes. Die Besonderheit, dass auch vom Nachbrand herrührende, mit der Stromdüse verschweisste Schweissperlen mühelos gelöst werden können, macht die neue Vielzweckzange zum unentbehrlichen Werkzeug für den Schweisser.

## Patentansprüche

1. Zange (1) zur Wartung von Schutzgasschweißgeräten, die eine Schutzgasdüse (4), einen Gasaustrittskanal (8) und eine Stromdüse (2) aufweisen, bestehend aus zwei über ein Gelenk zangenartig verbundenen Zangenschenkeln (26), die an ihren vorderen Enden metallische Klingen (13) aufweisen, die an die Form des Gasaustrittskanals (8) der Schutzgasdüse (4) angepaßt sind, und die Zangenschenkel (26) durch eine Druckfeder (15) in eine Spreizstellung beaufschlagt sind, in der die Rücken (16) der Klingen (13) jeweils an der Innenwand der Schutzgasdüse (4) anliegen, dadurch gekennzeichnet, daß ein Zangenschenkel (26) an seinem hinteren Ende einen flaschenöffnerartigen Schweißperlenhaken (5) aufweist, der aus einem in den Gasaustrittskanal (8) hineinragenden und die Stromdüse (2) umgreifenden Hebel (6) und einem spitzen Haken (7') zum Hintergreifen einer an der Stirnfläche (9) der Stromdüse (2) haftenden Schweißperle (3) besteht.

2. Zange nach Anspruch 1, dadurch gekennzeichnet, daß die Spreizstellung der Klingen (13) durch in Rillen (19) eingreifende Anschlagnocken (18) auf etwa 15° begrenzt ist.

3. Zange nach Anspruch 1 oder 2, dadurch gekennzeichnet, daß die Kanten der Rücken (16) der beiden Klingen (13) so abgerundet sind, daß ein ungehindertes Drehen zur Entfernung von Metallspritzern (12) an der Innenwand der Schutzgasdüse (4) möglich ist.

4. Zange nach einem der Ansprüche 1 bis 3, dadurch gekennzeichnet, daß die Klingen (13) an ihren sich gegenüberliegenden Innenseiten Schneiden (22) zum Ablängen eines Schweißdrahtes (11) aufweisen.

5. Zange nach Anspruch 4, dadurch gekennzeichnet, daß die Zangenschenkel (26) in Nähe der Schneiden (22) wenigstens eine seitlich angeordnete Distanzbacke (23) aufweisen, die bei Anlage an die Vorderkante (20) der Schutzgasdüse (4) einen Abstand (21) zwischen Vorderkante (20) und Schnittkante (24) der Schneiden (22) festlegt.

6. Zange nach Anspruch 5, dadurch gekennzeichnet, daß der Abstand (21) etwa 4 bis 8 mm beträgt.

7. Zange nach einem der Ansprüche 1 bis 6, dadurch gekennzeichnet, daß zwischen den Zangenschenkeln (26) ein an die Außenform der Schutzgasdüse (4) angepaßter Rachenausschnitt (25) zum Greifen der Schutzgasdüse (4) vorgesehen ist.

8. Zange nach Anspruch 7, dadurch gekennzeichnet, daß der Rachenausschnitt (25) geriffelt ist.

9. Zange nach einem der Ansprüch 1 bis 8, dadurch gekennzeichnet, daß zwischen den Zangenschenkeln (26) an die Außenform der Stromdüse (2) angepaßte Kerben (28) zum Greifen der Stromdüse (2) vorgesehen sind.

10. Zange nach Anspruch 9, dadurch gekennzeichnet, daß die Kerben (28) V-förmig ausgebildet sind.

11. Zange nach einem der Ansprüche 1 bis 10, dadurch gekennzeichnet, daß die Zangenschenkel (26) mit Kunststoffgriffen (29) versehen sind, die den Rachenausschnitt (25) und/oder die Kerben (28) freilassen.

12. Zange nach einem der Ansprüche 1 bis 11, dadurch gekennzeichnet, daß der spitze Haken (7') - in Vorderansicht gesehen - an seiner spitzen Kante eine V-förmige Kerbe oder Nut aufweist.

## Claims

1. Pincers (1) for the maintenance of equipment used for welding under protective gas, featuring a protective gas nozzle (4), a gas outlet channel (8) and a wire guide (2), said pincers consisting of two pincer legs (26) connected to one another via a joint like pliers, said legs featuring metal blades (13) at their front ends, said blades being shaped to match the shape of the gas outlet channel (8) of the protective gas nozzle (4), the pincer legs (26) being maintained in an open position by virtue of the pressure action exerted by a pressure spring (15), each of the non-cutting edges (16) of the blades (13) being positioned against the inner wall of the protective gas nozzle (4) when the pincers are in said open position, said pincers characterized in that one of the pincer legs (26) features a weld bead hook (5) at its lower end, said weld bead hook being similar to the bottle/can opener blade of a pocket knife, said weld bead hook consisting of a lever (6) which projects inside the gas outlet channel (8) and grips around the wire guide (2), and of a sharp hook (7') for gripping behind the weld bead (3) stuck to the fore-part (9) of the wire guide (2).

2. Pincers as claimed in Claim 1 wherein the open position of the blades (13) is limited to ca. 15° by virtue of transverse dogs (18) which engage in grooves (19).

3. Pincers as claimed in Claim 1 or 2 wherein the edges of the non-cutting edges (16) of both blades (13) are rounded in such a manner that the pincers can be rotated in an unimpeded manner for the purpose of removing metal sputter (12) on the inner wall of the protective gas nozzle (4).

4. Pincers as claimed in one of the Claims 1 to 3 wherein the blades (13) incorporate cutters (22) on their opposing inner sides for the purpose of cutting off the welding rod (11) at the proper length.

5. Pincers as claimed in Claim 4 wherein the pincer legs (26) feature a spacer cheek (23) on at least one side in the vicinity of the cutters (22), when positioned against the front edge (20) of the protective gas nozzle (4) establishing a specific distance (21) between the front edge (20) and the cut edge (24) of the cutters (22).

6. Pincers as claimed in Claim 5 wherein the distance (21) amounts to between ca. 4 and 8 mm.

7. Pincers as claimed in one of the Claims 1 to 6 wherein an external recess (25) is provided between the pincer legs (26), said recess being shaped to fit the outer shape of a protective gas nozzle (4) for the purpose of gripping the same.

8. Pincers as claimed in Claim 7 wherein the external recess (25) is corrugated.

9. Pincers as claimed in one of the Claims 1 to 8 wherein notches (28) are provided between the pincer legs (26), said notches being shaped to fit the outer shape of a wire guide (2) for the purpose of gripping the same.

10. Pincers as claimed in Claim 9 wherein the notches (28) are V-shaped.

11. Pincers as claimed in one of the Claims 1 to 10 wherein the pincer legs (16) are provided with plastic grips (29), said grips not impeding or covering the external recess (25) or the notches (28).

12. Pincers as claimed in one of the Claims 1 to 11 wherein the sharp hook (7') -- when viewed from the front -- features a V-shaped notch or groove in its sharp edge.

## Revendications

1. Pince (1) pour l'entretien d'appareils de soudage à l'arc en atmosphère gazeuse qui comportent une buse à gaz protecteur (4), un canal de sortie du gaz (8) et une tuyère (2), et qui est constituée de deux branches (26) de pince réunies en tenailles par une articulation et munies à leur extrémité antérieure de lames métalliques (13) adaptées à la forme du canal de sortie des gaz (8) de la buse à gaz protecteur (4), les branches (26) de pince étant rappelées au moyen d'un ressort (15) en position écartée dans laquelle chacun des dos (16) des lames (13) s'ajuste à la paroi intérieure de la buse à gaz protecteur (4), caractérisée en ce qu'une des branches (26) de la pince présente à son extrémité postérieure un crochet à perles de soudure (5) en forme de décapsuleur de bouteilles constitué d'un levier (6) pour pénétrer dans le canal de sortie du gaz (8) et envelopper la tuyère (2) et d'un crochet pointu (7') pour accrocher une perle de soudure (3) adhérant à la tête (9) de la tuyère (2).

2. Pince selon la revendication 1, caractérisée en ce que l'ouverture des lames (13) est limitée à environ 15° par des ergots de butée (18) coulissant dans des rainures (19).

3. Pince selon les revendications 1 ou 2, caractérisée en ce que les arêtes du dos (16) des deux lames (13) sont arrondies de manière à permettre une rotation sans entraves pour éliminer les projections métalliques (12) sur la paroi intérieure de la buse à gaz protecteur (4).

4. Pince selon l'une des revendications 1 à 3, caractérisée en ce que les lames (13) serrées contre le couteau intérieur (22) opposé qui leur fait face, permettent la mise à longueur de l'électrode de soudure (11).

5. Pince selon la revendication 4, caractérisée en ce que les branches (26) de la pince présentent au moins un renflement de la joue (23) aménagé latéralement à proximité des couteaux (22) et qui, par application contre la tête (20) de la buse à gaz protecteur (4), détermine une distance (21) entre le bout de la tête (20) et le plan de coupe (24) des couteaux (22).

6. Pince selon la revendication 5, caractérisée en ce que la distance (21) s'élève à environ 4 à 8 mm.

7. Pince selon l'une des revendications 1 à 6, caractérisée en ce qu'une découpe (25) dans les mâchoires adaptée à la forme extérieure de la buse à gaz protecteur (4) est prévue entre les branches (26) de la pince pour la prise de la buse à gaz protecteur (4).

8. Pince selon la revendication 7, caractérisée en ce que la découpe (25) dans les machoires est cannelée.

9. Pince selon l'une des revendications 1 à 8, caractérisée en ce que des entailles (28) adaptées à la forme extérieure de la tuyère (2) sont prévues entre les branches (26) de la pince pour la prise de la tuyère (2).

10. Pince selon la revendication 9, caractérisée en ce que les entailles (28) sont faites en forme de V.

11. Pince selon l'une des revendications 1 à 10, caractérisée en ce que les branches (26) de la pince sont pourvues de poignées (29) en matière plastique qui laissent libres les découpes (25) et/ou les entailles (28).

12. Pince selon l'une des revendications 1 à 11, caractérisée en ce que - vu de face - le crochet pointu (7') présente sur son côté pointu une entaille ou une rainure en forme de V.
